# EUROPÄISCHE PATENTSCHRIFT

(11) **EP 3 593 616 B1**
(45) Veröffentlichungstag und Bekanntmachung des Hinweises auf die Patenterteilung: **01.09.2021**
(21) Anmeldenummer: 19172879.9
(22) Anmeldetag: 07.05.2019
(51) Int. Cl.: A01D 41/127

(54) **LANDWIRTSCHAFTLICHE ARBEITSMASCHINE**
AGRICULTURAL MACHINE
ENGIN DE TRAVAIL AGRICOLE

(30) Priorität: 13.07.2018 DE 102018116990
(43) Veröffentlichungstag der Anmeldung: 15.01.2020
(73) Patentinhaber: CLAAS Selbstfahrende Erntemaschinen GmbH, 33428 Harsewinkel (DE)
(72) Erfinder: Barther, Marvin, 33161 Hövelhof (DE); Neitemeier, Dennis, 59510 Lippetal (DE); Fischer, Frédéric, 59823 Arnsberg (DE)
(74) Vertreter: CLAAS Gruppe

(56) Entgegenhaltungen:
- EP-A1- 2 143 316
- EP-A1- 3 150 047
- EP-A1- 3 300 019

## Beschreibung

Die Erfindung betrifft eine landwirtschaftliche Arbeitsmaschine, insbesondere Erntemaschine, gemäß dem Oberbegriff von Anspruch 1 sowie ein Verfahren zum Betrieb einer landwirtschaftlichen Arbeitsmaschine gemäß dem Oberbegriff von Anspruch 19.

Landwirtschaftliche Arbeitsmaschinen, zu denen insbesondere selbstfahrende Erntemaschinen wie Mähdrescher und Feldhäcksler zählen, weisen regelmäßig eine Erntegutbergungsanordnung auf, mit der Erntegut im Feldbestand abgetrennt und zur weiteren Verarbeitung aufgenommen werden kann. Eine Erntegutbergungsanordnung ihrerseits weist regelmäßig eine Vielzahl von einzelnen Komponenten auf, welche mit unterschiedlichen Parametern betrieben werden können. Beispiele für solche Komponenten sind bei einem Mähdrescher eine Erntegutaufnahmevorrichtung in Form einer Haspel, eine Erntegutschneidvorrichtung in Form eines Schneidwerkstisches mit einem Messerbalken, eine Erntegutfördervorrichtung in Form einer Förderschnecke, insbesondere Querförderschnecke, und eine Ernteguteinzugsvorrichtung in Form eines Schrägförderers. Bei einem Mähdrescher kann beispielsweise die Lage (Schnitthöhe, Position) und Drehzahl der Haspel sowie die Geschwindigkeit der Querförderschnecke und des Schrägförderers eingestellt werden. Auf diese Weise lässt sich der Erntegutstrom innerhalb der Erntegutbergungsanordnung beeinflussen. Weiteren Einfluss auf den Erntegutstrom innerhalb der Erntegutbergungsanordnung hat die Fahrgeschwindigkeit der Erntemaschine, da auf diese Weise die aufgenommene Erntegutmenge beeinflusst wird, die von der Erntegutbergungsanordnung verarbeitet wird.

Trotz einer Reihe von automatischen Einstellungen der Erntegutbergungsanordnung muss der Fahrer der landwirtschaftlichen Arbeitsmaschine dauerhaft den Erntegutstrom innerhalb der Erntegutbergungsanordnung visuell überwachen. Er muss beispielsweise darauf achten, dass eine möglichst gleichmäßige Gutflussgeschwindigkeit innerhalb der Erntegutbergungsanordnung vorhanden ist, da bei einem ungleichmäßigen Gutfluss eventuell die Fahrzeuggeschwindigkeit und damit eine Erntegutaufnahme reduziert werden muss, um einen Gutstau zu vermeiden. Tritt ein Gutstau, das heißt eine Reduzierung der Gutflussgeschwindigkeit bis hin zu einem Stillstand, auf, muss der Erntevorgang abgebrochen und eine aufwendige Beseitigung des Gutstaus vorgenommen werden. Die hierfür erforderliche Zeit beeinträchtigt die Wirtschaftlichkeit des Erntebetriebes signifikant.

Eine Herausforderung ist es, einen Gutstau möglichst frühzeitig zu erkennen. Ist ein Gutstau erst visuell deutlich sichtbar, ist es für eine Korrektur des Betriebs der Erntegutbergungsanordnung häufig schon zu spät. Aus diesem Grund ist es aus der EP 3 300 019 A1 bekannt, eine Regelungseinrichtung mit einer Sensoreinheit und einer Bildverarbeitungseinheit vorzusehen, über die anhand der Methode des optischen Flusses der Erntegutstrom überwacht wird. Die Sensoreinrichtung weist beispielsweise zwei Kameras auf, die von der Fahrerkabine auf die Erntegutbergungsanordnung gerichtet sind und dort einzelne Abschnitte der Komponenten und den Erntegutstrom erfassen. Die Sensoreinrichtung erzeugt eine Bildsequenz, also eine Vielzahl aufeinanderfolgender Bilder. Jeweils zwei aufeinanderfolgende Bilder werden gemäß Stand der Technik zu einem Bildpaar gruppiert, wobei Positionsverschiebungen von Intensitätsmustern (Pixeln oder Pixelgruppen) zwischen den Bildern des jeweiligen Bildpaares ermittelt werden. Die Intensitätsmuster werden dabei nicht zwingend von Objekten oder konkreten Erntegutmerkmalen gebildet, sondern allgemein von Pixeln oder Pixelgruppen im Bild, deren Position sich von dem einen Bild auf das nächste Bild ändert. Aus diesen Positionsverschiebungen der Intensitätsmuster lässt sich, wenn die Zeitspanne zwischen den Bildern des Bildpaars bekannt ist, auf die Geschwindigkeit schließen, mit denen sich die Intensitätsmuster fortbewegen. Die Geschwindigkeiten mehrerer Intensitätsmuster lassen sich für jedes Bildpaar und jede aus mehreren Bildpaaren bestehende Bildsequenz zu Geschwindigkeitskennfeldern zusammenfassen, die auch visuell dargestellt werden können. Bei einem solchen Geschwindigkeitskennfeld spricht man auch vom optischen Fluss. Hinsichtlich der Methode des optischen Flusses und deren Anwendung zur Überwachung des Erntegutstroms innerhalb einer Erntegutbergungsanordnung darf auf die EP 3 300 019 A1 verwiesen werden, die auf die Anmelderin zurückgeht und deren Inhalt insoweit zum Gegenstand der vorliegenden Anmeldung gemacht wird.

Bei dem genannten Stand der Technik, der die Methode des optischen Flusses, also Geschwindigkeitskennfelder, zur Überwachung der Erntegutbergungsanordnung und zur Vermeidung von Gutstaus nutzt, kommt es auf eine möglichst präzise Bildverarbeitung an, um den Verlauf der Intensitätsmuster möglichst genau ermitteln zu können und entsprechend frühzeitig auf einen sich anbahnenden Gutstau reagieren zu können.

Der Erfindung liegt das Problem zu Grunde, eine landwirtschaftliche Arbeitsmaschine derart auszugestalten und weiterzubilden, dass die Überwachung einer Erntegutbergungsanordnung hinsichtlich der Genauigkeit, Zuverlässigkeit und Rechtzeitigkeit weiter verbessert wird.

Das obige Problem wird bei einer landwirtschaftlichen Arbeitsmaschine gemäß dem Oberbegriff von Anspruch 1 durch die Merkmale des kennzeichnenden Teils von Anspruch 1 gelöst.

Wesentlich ist die grundsätzliche Überlegung, die Informationen, die ein Geschwindigkeitskennfeld bereitstellt, um weitere Informationen, die über die Methode des optischen Flusses erhalten werden können, zu ergänzen. So liefert die bereits zuvor erläuterte Auswertung von Bildpaaren einer von der Sensoreinheit erzeugten Bildsequenz nicht nur Informationen zu Geschwindigkeiten von Intensitätsmustern, also von Pixeln und/oder Pixelgruppen, innerhalb der Bilder, sondern auch Informationen über die Bewegungsrichtung der Intensitätsmuster. So kann pixelbasiert aus einem Bildpaar eine Bewegungsrichtung des jeweiligen Intensitätsmusters ermittelt werden. Aus mehreren Bildpaaren, die denselben Bildausschnitt und somit dieselben Intensitätsmuster zeigen und die insbesondere unmittelbar aufeinanderfolgen, lassen sich entsprechend Richtungsänderungen ermitteln. Die Richtungsänderungen der einzelnen Intensitätsmuster lassen sich wie die Geschwindigkeiten derselben in einem Kennfeld zusammenfassen, einem sogenannten Richtungsänderungskennfeld. Das Richtungsänderungskennfeld zeigt die Richtungsänderungen der Intensitätsmuster von einem Bildpaar auf das nächste Bildpaar, insbesondere für die gesamte Bildsequenz.

Die Informationen aus dem jeweiligen Richtungsänderungskennfeld können dann herangezogen werden, um die Informationen aus dem zugeordneten, also zeitlich korrespondierenden, Geschwindigkeitskennfeld auf ihre Plausibilität hin zu überprüfen. So kommt es bei niedrigen Gutflussgeschwindigkeiten, die auf einen Gutstau oder einen sich zumindest anbahnenden Gutstau hindeuten, lokal zu relativ großen Richtungsänderungen, da sich die Erntegutpartikel und somit auch die Intensitätsmuster verstärkt quer zur Hauptströmungsrichtung bewegen. Diese Querbewegungen werden als Abweichungen von der Hauptströmungsrichtung des Ernteguts erkannt, wobei der Grad dieser Abweichungen mit abnehmender Geschwindigkeit in Hauptströmungsrichtung steigt. Man spricht hier auch von einer Streuung der Winkel, die die Richtungsänderungen definieren. Es lassen sich somit Stellen im Geschwindigkeitskennfeld, die auf niedrige Geschwindigkeiten hindeuten, nochmals anhand des zugeordneten Richtungsänderungskennfelds überprüfen. Fehler bei der Ermittlung der tatsächlichen Gutflussverläufe lassen sich auf diese Weise minimieren.

Vorschlagsgemäß ist nun vorgesehen, dass die Bildverarbeitungseinheit konfiguriert ist, basierend auf den von der Sensoreinheit erzeugten Bildern zusätzlich zu dem Geschwindigkeitskennfeld ein Richtungsänderungskennfeld zu erstellen, und dass die beiden Kennfelder gemeinschaftlich oder jedes einzeln von der Regelungseinrichtung zur Regelung von Prozessen in der landwirtschaftlichen Arbeitsmaschine und/oder in der Erntegutbergungsanordnung herangezogen werden. Indem neben dem Geschwindigkeitskennfeld auch ein Richtungsänderungskennfeld berücksichtigt wird, kann die Genauigkeit und somit auch die Zuverlässigkeit und Rechtzeitigkeit der Überwachung des Erntegutflusses in der Erntegutbergungsanordnung verbessert werden.

Nach der Ausgestaltung gemäß Anspruch 2 kann das Geschwindigkeitskennfeld Gutflussgeschwindigkeiten und/oder Geschwindigkeiten von Oberflächenabschnitten von Maschinenteilen aufweisen. Bei den Maschinenteilen handelt es sich um solche der Komponenten der Erntegutbergungsanordnung. Da sich auch diese bewegen und von der Sensoreinheit optisch erfasst werden können, können auch hierzu pixelbasierte Positionsverschiebungen erkannt und entsprechende Geschwindigkeiten daraus abgeleitet werden. Zusätzlich oder alternativ kann das Richtungsänderungskennfeld Richtungsänderungen im Erntegutstrom und/oder von den Oberflächenabschnitten der Maschinenteile aufweisen. Hierbei ergibt sich ein besonderer Vorteil. Da Maschinenteile unter Umständen als Bereiche mit niedriger Geschwindigkeit erkannt werde, kann durch Hinzuziehung des Richtungsänderungskennfelds ermittelt werden, ob die jeweils erkannte Stelle mit niedriger Geschwindigkeit eine von Erntegut durchströmte Stelle ist, was auf einen Stau hindeuten würde, oder ob die Stelle frei von Erntegut ist und die niedrige Geschwindigkeit hier lediglich auf die niedrige Geschwindigkeit des jeweiligen Oberflächenabschnitts des Maschinenteils zurückzuführen ist. Fehlinterpretationen, bei denen fälschlicherweise Stellen niedriger Geschwindigkeit als Gutstau interpretiert werden, obwohl hier tatsächlich kein Gutstau und insbesondere gar kein Erntegut vorhanden ist, können auf diese Weise verhindert werden.

Die Ansprüche 3 bis 8 definieren bevorzugte Möglichkeiten zur Erstellung der beiden Kennfelder, das heißt des Geschwindigkeitskennfelds und des Richtungsänderungskennfelds. Dabei können die jeweils von der Bildverarbeitungseinheit ermittelten Geschwindigkeiten einerseits und die jeweils von der Bildverarbeitungseinheit ermittelten Richtungsänderungen bzw. Winkel andererseits über die Datenausgabeeinheit jeweils auch graphisch angezeigt werden (Ansprüche 6 und 8). Besonders bevorzugt werden dabei verschiedene Geschwindigkeiten und/oder verschiedene Richtungsänderungen mit unterschiedlichen Farben dargestellt.

Nach der besonders bevorzugten Ausgestaltung gemäß Anspruch 9 kann die graphische Darstellung der Geschwindigkeiten und/oder Richtungsänderungen auch in einer Anzeigeeinrichtung der Datenausgabeeinheit erfolgen, wodurch diese für den Fahrer visuell wahrnehmbar sind.

Die Ansprüche 10 und 11 definieren bevorzugte Ausgestaltungen der Regelungseinrichtung, die die berechneten Geschwindigkeiten bzw. Richtungsänderungen mit vorgegebenen Grenzwerten vergleichen kann. Insbesondere kann jeweils ein oberer Grenzwert und ein unterer Grenzwert festgelegt werden, wobei alle Geschwindigkeiten bzw. Richtungsänderungen oberhalb des oberen Grenzwerts einen optimalen Gutfluss definieren, und/oder, wobei Geschwindigkeiten bzw. Richtungsänderungen zwischen den beiden Grenzwerten als Gutfluss interpretiert werden, bei dem sich ein Gutstau anbahnt, und/oder, wobei Geschwindigkeiten bzw. Richtungsänderungen unterhalb des unteren Grenzwerts als Gutstau interpretiert werden. Mit einer solchen Unterteilung, insbesondere bei Verwendung eines Bereichs oberhalb eines oberen Grenzwerts, eines weiteren Bereichs zwischen dem oberen und einem unteren Grenzwert und einem Bereich unterhalb des unteren Grenzwerts, lässt sich besonders frühzeitig auf Veränderungen im Gutfluss reagieren. Insbesondere lassen sich auch Prognoseinformationen erzeugen, die bereits im Vorfeld eines sich anbahnenden Gutstaus Regelungsmaßnahmen bewirken, die schon die Anbahnung eines Gutstaus und erst recht einen tatsächlichen Gutstau verhindern können.

In Anspruch 12 sind bevorzugte Bereiche definiert, die von der Sensoreinheit erfasst werden können. So kann der (ungeerntete) Feldbestand vor der Erntegutbergungsanordnung sowie der (geerntete) Feldbestand hinter der Erntegutbergungsanordnung erfasst werden. Auch können Komponenten der Erntegutbergungsanordnung wie eine Erntegutaufnahmevorrichtung, eine Erntegutschneidvorrichtung, eine Erntegutfördervorrichtung und eine Ernteguteinzugsvorrichtung erfasst werden. Ferner kann der Erntegutstrom an verschiedenen Stellen, beispielsweise innerhalb der Erntegutaufnahmevorrichtung und/oder oberhalb der Erntegutschneidvorrichtung erfasst werden.

Nach der Ausgestaltung gemäß Anspruch 13 ist die Bildverarbeitungseinheit dazu eingerichtet, in den Bildern Bildbereiche zu ermitteln, die insbesondere den vorgenannten Bereichen entsprechen. Die Bildbereiche können dann einzeln analysiert und auch graphisch dargestellt werden. Dies erlaubt es, für den jeweiligen Bildbereich die Geschwindigkeiten und/oder Richtungsänderungen zu berechnen und für den jeweiligen Bildbereich das Kennfeld zu erstellen (Anspruch 14).

Nach der besonders bevorzugten Ausgestaltung gemäß Anspruch 15 kann der Bildbereich mit dem Erntegutstrom innerhalb der Erntegutaufnahmevorrichtung und/oder der Bildbereich mit dem Erntegutstrom vertikal oberhalb der Erntegutschneidvorrichtung jeweils quer zur Fahrtrichtung in Unterbereiche unterteilt werden, wobei für jeden Unterbereich mittlere Werte für die Gutflussgeschwindigkeiten angegeben werden können. Bei diesen mittleren Werten handelt es sich vorzugsweise jeweils um einen Absolutwert oder um das Verhältnis zu einem Referenzwert. Auf diese Weise kann die Homogenität des Gutflusses, insbesondere als Prozentwerte, ermittelt werden. Diese Werte lassen sich vorzugsweise auch graphisch anzeigen (Anspruch 16). Auch hierzu können unterschiedliche Farben o.dgl. für unterschiedliche Werte oder Wertebereiche verwendet werden. Grundsätzlich ist aber auch die Darstellung als Zahlenwerte denkbar.

Anspruch 17 definiert verschiedene Regelungsmaßnahmen, die unter Heranziehung der Kennfelder durchgeführt werden können. Diese Regelungsmaßnahmen können schon frühzeitig, das heißt im Vorfeld eines sich anbahnenden Gutstaus, erfolgen.

Anspruch 18 definiert Beispiele für die Erntegutaufnahmevorrichtung, die Erntegutschneidvorrichtung, die Erntegutfördervorrichtung und die Ernteguteinzugsvorrichtung .

Nach einer weiteren Lehre gemäß Anspruch 19, der eigenständige Bedeutung zukommt, wird ein Verfahren zum Betrieb einer landwirtschaftlichen Arbeitsmaschine, insbesondere einer vorschlagsgemäßen landwirtschaftlichen Arbeitsmaschine, beansprucht, bei dem neben einem Geschwindigkeitskennfeld auch ein Richtungsänderungskennfeld erstellt und von der Regelungseinrichtung zur Regelung von Prozessen in der landwirtschaftlichen Arbeitsmaschine und/oder in der Erntegutbergungsanordnung herangezogen wird. Hinsichtlich des Verfahrens sei auf die Ausführungen zur vorschlagsgemäßen landwirtschaftlichen Arbeitsmaschine verwiesen.

Im Folgenden wird die Erfindung anhand einer lediglich ein Ausführungsbeispiel darstellenden Zeichnung näher erläutert. In der Zeichnung zeigt
- Fig. 1: eine schematische Seitenansicht einer vorschlagsgemäßen landwirtschaftlichen Arbeitsmaschine sowie eine Detailansicht der Erntegutbergungsanordnung der landwirtschaftlichen Arbeitsmaschine,
- Fig. 2: eine schematische Vorderansicht der vorschlagsgemäßen landwirtschaftlichen Arbeitsmaschine mit der Erntegutbergungsanordnung,
- Fig. 3: eine schematische Darstellung a) eines von der Sensoreinheit der vorschlagsgemäßen landwirtschaftlichen Arbeitsmaschine erzeugten Bildes mit der Erntegutbergungsanordnung, und b) des Bildes nach einer Verarbeitung durch die Bildverarbeitungseinheit der vorschlagsgemäßen landwirtschaftlichen Arbeitsmaschine und
- Fig. 4: eine schematische Darstellung einer Anzeigeeinrichtung der Datenausgabeeinheit der vorschlagsgemäßen landwirtschaftlichen Arbeitsmaschine.

Die vorschlagsgemäße landwirtschaftliche Arbeitsmaschine 1, bei der es sich hier beispielhaft um einen Mähdrescher handelt, weist eine Erntegutbergungsanordnung 2 auf, die hier von einem Schneidwerk 3 gebildet wird und in Fahrtrichtung vorne an der landwirtschaftlichen Arbeitsmaschine 1 angeordnet ist. Die Erntegutbergungsanordnung 2 bzw. das Schneidwerk 3 dient dem Abtrennen und Aufnehmen von Erntegut 4 aus einem Feldbestand 5, wobei das Erntegut 4 einer weiteren Verarbeitung durch mehrere weitere Arbeitsorgane 6 der landwirtschaftlichen Arbeitsmaschine 1 zugeführt wird.

Die Erntegutbergungsanordnung 2 weist als Komponenten hier und vorzugsweise eine Erntegutaufnahmevorrichtung 7 in Form einer Haspel, eine Erntegutschneidvorrichtung 8 in Form eines Schneidwerkstisches mit einem Messerbalken, eine dieser prozesstechnisch nachgeordnete Erntegutfördervorrichtung 9 in Form einer Förderschnecke, insbesondere Querförderschnecke, und eine dieser wiederum prozesstechnisch nachgeordnete Ernteguteinzugsvorrichtung 10 in Form eines Schrägförderers auf.

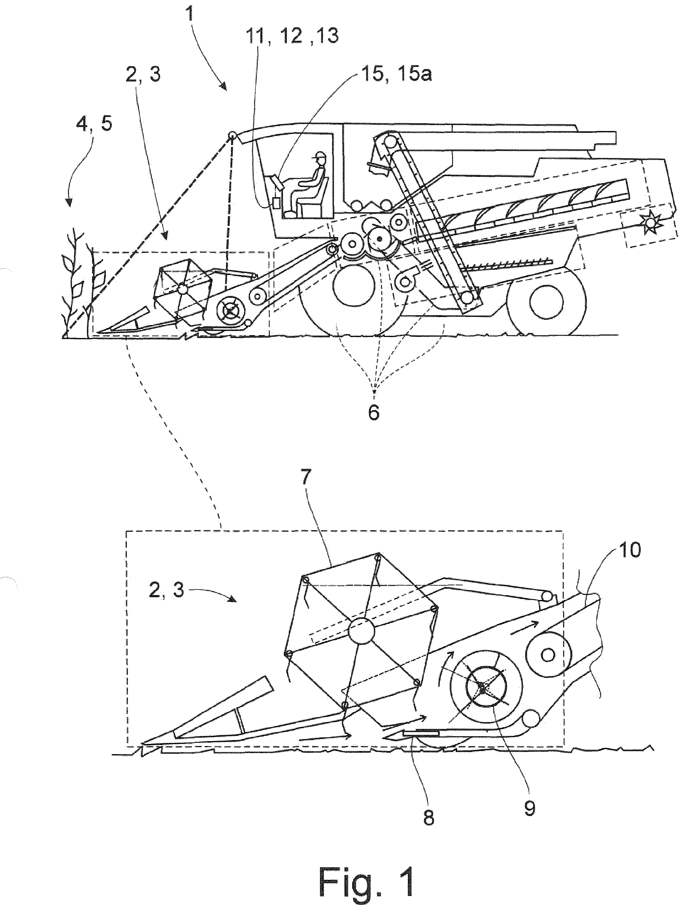

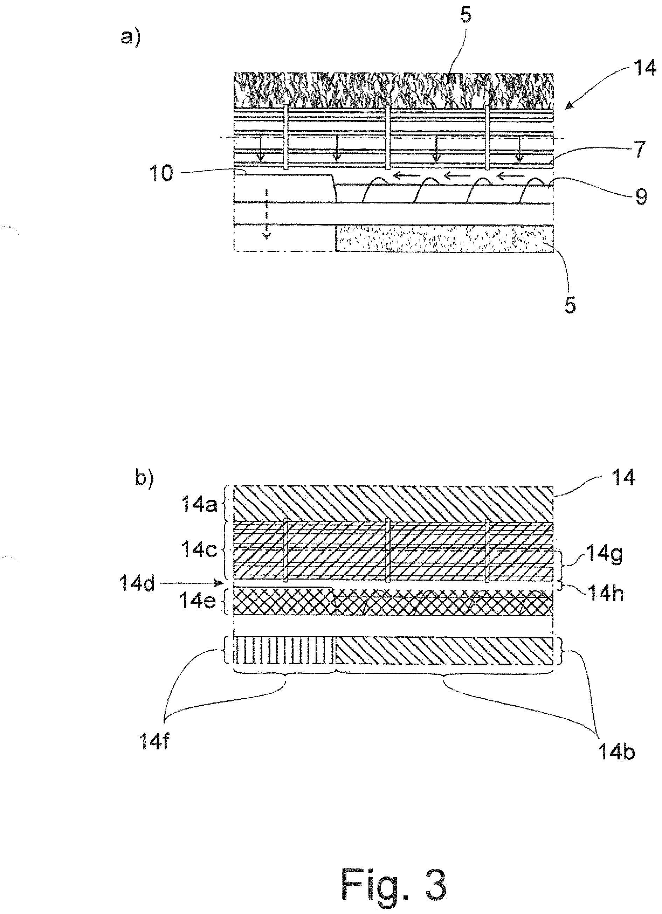

Bei der vorschlagsgemäßen landwirtschaftlichen Arbeitsmaschine 1 wird das Erntegut 4 als Erntegutstrom (in Fig. 1 und 3a) durch Pfeile dargestellt) durch die Erntegutbergungsanordnung 2 geführt. Hier und vorzugsweise wird das Erntegut 4 über die Erntegutaufnahmevorrichtung 7 bzw. Haspel aufgenommen und gehalten, während es von der Erntegutschneidvorrichtung 8 abgetrennt wird. Das abgetrennte Erntegut 4 wird dann gegen die hier und vorzugsweise quer verlaufende Erntegutfördervorrichtung 9 bewegt und von dieser in Querrichtung, das heißt quer zur Fahrrichtung, zur Fahrzeugmitte hin gefördert, wo es dann von der Ernteguteinzugsvorrichtung 10 eingezogen und weiter ins Innere der landwirtschaftlichen Arbeitsmaschine 1 gefördert wird.

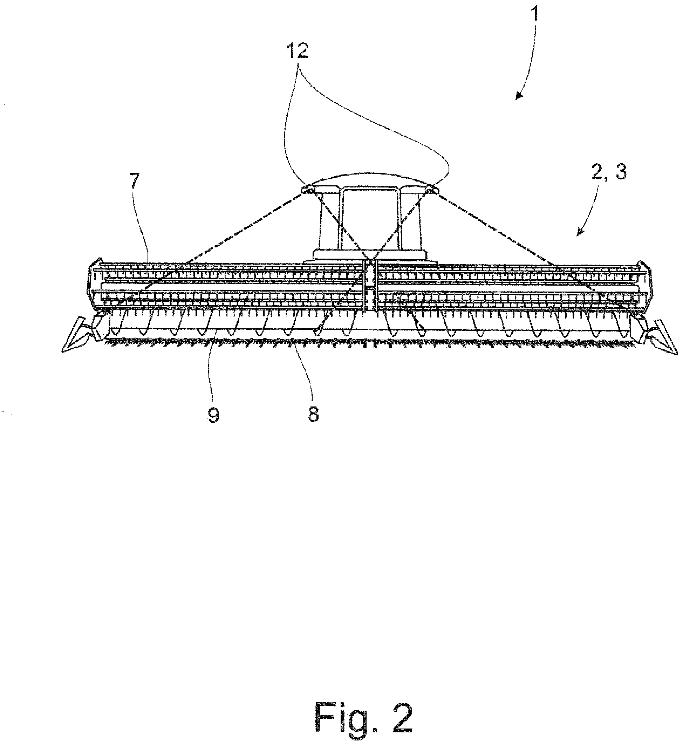

Die landwirtschaftliche Arbeitsmaschine 1 weist ferner eine Regelungseinrichtung 11 auf, die hier und vorzugsweise dazu dient, neben den genannten Komponenten 7-10 der Erntegutbergungsanordnung 2 auch die weiteren Arbeitsorgane 6 der landwirtschaftlichen Arbeitsmaschine 1 zu regeln. Die Regelung kann eine Geschwindigkeits- bzw. Drehzahlregelung und/oder Höhenverstellungen und/oder Positionsverstellungen umfassen. Auch wird hier und vorzugsweise über die Regelungseinrichtung 11 die Fahrgeschwindigkeit der landwirtschaftlichen Arbeitsmaschine 1 geregelt. Die Regelungseinrichtung 11 weist hier und vorzugsweise eine Sensoreinheit 12 in Form zweier Kameras auf, wobei die Sensoreinheit 12 im Frontbereich der landwirtschaftlichen Arbeitsmaschine 1 angeordnet ist und der optischen Erfassung des Erntegutstroms dient. Der Bereich der optischen Erfassung ist hier symbolisch in den Fig. 1 und 2 gestrichelt dargestellt.

Weiter weist die Regelungseinrichtung 11 eine Bildverarbeitungseinheit 13 zur Verarbeitung von Bildern 14 auf, von denen eines beispielhaft in Fig. 3a) dargestellt ist. Die Bilder 14 werden von der Sensoreinheit 12 basierend auf dem optisch erfassten Erntegutstrom erzeugt.

Außerdem weist die Regelungseinrichtung 11 eine Datenausgabeeinheit 15 auf, die hier und vorzugsweise eine Anzeigeeinrichtung 15a umfasst und zur Ausgabe der von der Bildverarbeitungseinheit 13 verarbeiteten Bilder 14 dient.

Die Bildverarbeitungseinheit 13 erstellt bei der vorschlagsgemäßen landwirtschaftlichen Arbeitsmaschine 1 basierend auf den von der Sensoreinheit 12 erzeugten Bildern 14 ein Geschwindigkeitskennfeld 16, auch als optischer Fluss bezeichnet. Der optische Fluss ist die durch eine Bildfrequenz gegebene pixelweise Bewegung in der Bildfläche, auch als Flussfeld bezeichnet. Die Bildfrequenz ist dabei wiederum mit der Pixelposition und dem Zeitpunkt definiert. Die Bewegung ist ein Vektorfeld in einem Bild 14, das durch Überlagerung zweier Bilder 14 eines Bildpaars erzeugt wird, und beschreibt die zeitabhängige Verschiebung eines Pixels oder einer Pixelgruppe, im Weiteren auch als Intensitätsmuster bezeichnet, von einem zum nächsten Bild des Bildpaars. Das aus den beiden Einzelbildern 14 zusammengesetzte Bild kann dabei zuvor durch die Bildverarbeitungseinheit 13 überarbeitet werden, wie dies beispielsweise in der EP 3 300 019 A1 im Detail beschrieben ist. Lediglich beispielhaft sei hier die Lucas-Kanade-Methode genannt, bei der die Bildauflösung der Bilder reduziert wird. Weiterhin können eine Rauschunterdrückung, Kontraständerung, Helligkeitsänderung o.dgl. durchgeführt werden. Das resultierende Bild wird dann herangezogen, um das Geschwindigkeitskennfeld 16 zu erstellen.

Wesentlich ist nun, dass bei der vorschlagsgemäßen landwirtschaftlichen Arbeitsmaschine 1 die Bildverarbeitungseinheit 13 konfiguriert ist, basierend auf den von der Sensoreinheit 12 erzeugten Bildern 14 zusätzlich zu dem Geschwindigkeitskennfeld 16 ein Richtungsänderungskennfeld 17 zu erstellen. Vorschlagsgemäß werden dabei beide Kennfelder 16, 17 gemeinschaftlich oder jedes für sich von der Regelungseinrichtung 11 zu Regelung von Prozessen in der landwirtschaftlichen Arbeitsmaschine 1, beispielsweise zur Regelung der Arbeitsorgane 6, und/oder von Prozessen in der Erntegutbewegungsanordnung 2, beispielsweise der genannten Komponenten 7-10, herangezogen. Die Bildverarbeitungseinheit 13 erstellt dabei die Kennfelder 16, 17, die wiederum von der Regelungseinrichtung 11, insbesondere einer Rechnereinheit (nicht dargestellt) der Regelungseinrichtung 11, für die genannten Regelungsmaßnahmen herangezogen werden.

Das Geschwindigkeitskennfeld 16 weist hier zum Einen die Gutflussgeschwindigkeiten, insbesondere von Erntegutpartikeln, sowie Geschwindigkeiten von Oberflächenabschnitten von Maschinenteilen der Komponenten der Erntegutbergungsanordnung 2 auf, und zwar hier in Form von Geschwindigkeitsbereichen v₁-v₄, in denen jeweils mehrere der Geschwindigkeiten zu einem Bereich zusammengefasst sind. Das Richtungsänderungskennfeld 17 weist Richtungsänderungen, insbesondere von Erntegutpartikeln, im Erntegutstrom und/oder Richtungsänderungen von Oberflächenabschnitten von Maschinenteilen der Komponenten 7-10 der Erntegutbergungsanordnung 2 auf, hier in Form von Richtungsänderungsbereichen Δ₁-Δ₅, in denen jeweils mehrere der Richtungsänderungen zu einem Bereich zusammengefasst sind.

Zur Erstellung der Kennfelder 16, 17 gruppiert die Bildverarbeitungseinheit 13 jeweils zwei, insbesondere zwei unmittelbar aufeinanderfolgende, Bilder 14 einer von der Sensoreinheit 12 erzeugten Bildsequenz zu einem Bildpaar. Dabei wird eine Zeitspanne zwischen den Bildern 14 des jeweiligen Bildpaares von der Bildverarbeitungseinheit 13 erfasst. Zusätzlich oder alternativ kann eine Zeitspanne von der Bildverarbeitungseinheit 13 vorgegeben werden. Dabei weist jedes Bild 14 des jeweiligen Bildpaares ein Intensitätsmuster, also einen Pixel oder eine Pixelgruppe, auf. Die Bildverarbeitungseinheit 13 ermittelt von den Intensitätsmustern zwischen den Bildern 14 des jeweiligen Bildpaares Positionsverschiebungen, die Verschiebungsbeträge und Verschiebungsrichtungen umfassen. Hier und vorzugsweise werden die Verschiebungsbeträge und Verschiebungsrichtungen für jedes Bildpaar jeweils als Vektoren eines Vektorfeldes des jeweiligen Bildpaares zusammengefasst.

Aus den Verschiebungsbeträgen von den Intensitätsmustern zwischen den Bildern 14 des jeweiligen Bildpaares und der Zeitspanne zwischen den Bildern 14 des jeweiligen Bildpaares werden dann durch die Bildverarbeitungseinheit 13 Geschwindigkeiten berechnet. Die Geschwindigkeiten sind wie zuvor angedeutet Gutflussgeschwindigkeiten und/oder Geschwindigkeiten von Oberflächenabschnitten der Komponenten 7-10 der Erntegutbergungsanordnung 2. Hier und vorzugsweise werden dann die jeweiligen Geschwindigkeiten, hier in Form von Geschwindigkeitsbereichen v₁-v₄, in denen jeweils mehrere der Geschwindigkeiten zu einem Bereich zusammengefasst sind, von der Datenausgabeeinheit 15, insbesondere von der Anzeigeeinrichtung 15a, graphisch angezeigt, wobei hier und vorzugsweise verschiedene Geschwindigkeiten bzw. Geschwindigkeitsbereiche v₁-v₄ mit unterschiedlichen Farben dargestellt werden. Anstelle unterschiedlicher Farben können auch unterschiedliche Graustufen und/oder Texturen verwendet werden.

Die Bildverarbeitungseinheit 13 vergleicht hier und vorzugsweise Verschiebungsrichtungen von Intensitätsmustern eines ersten Bildpaares mit Verschiebungsrichtungen von zugeordneten Intensitätsmustern eines zweiten Bildpaares derselben Bildsequenz, insbesondere eines darauf unmittelbar folgenden Bildpaares. Mit zugeordneten Intensitätsmustern ist gemeint, dass in dem zweiten Bildpaar derselbe Pixel bzw. dieselbe Pixelgruppe wie in dem ersten Bildpaar herangezogen wird. Aus dem Vergleich der Verschiebungsrichtungen zwischen den beiden Bildpaaren werden die Richtungsänderungen berechnet. Dabei handelt es sich hier und vorzugsweise um Richtungsänderungen im Erntegutstrom und/oder von den Oberflächenabschnitten der Maschinenteile. Auch diese Richtungsänderungen werden von der Datenausgabeeinheit 15 bzw. Anzeigeeinrichtung 15a, hier in Form von Richtungsänderungsbereichen Δ₁-Δ₅, in denen jeweils mehrere der Richtungsänderungen zu einem Bereich zusammengefasst sind, graphisch dargestellt. Auch hier werden verschiedene Richtungsänderungen bzw. Richtungsänderungsbereiche Δ₁-Δ₅ durch unterschiedliche Farben dargestellt, wobei alternativ auch Graustufen und/oder Texturen verwendet werden können.

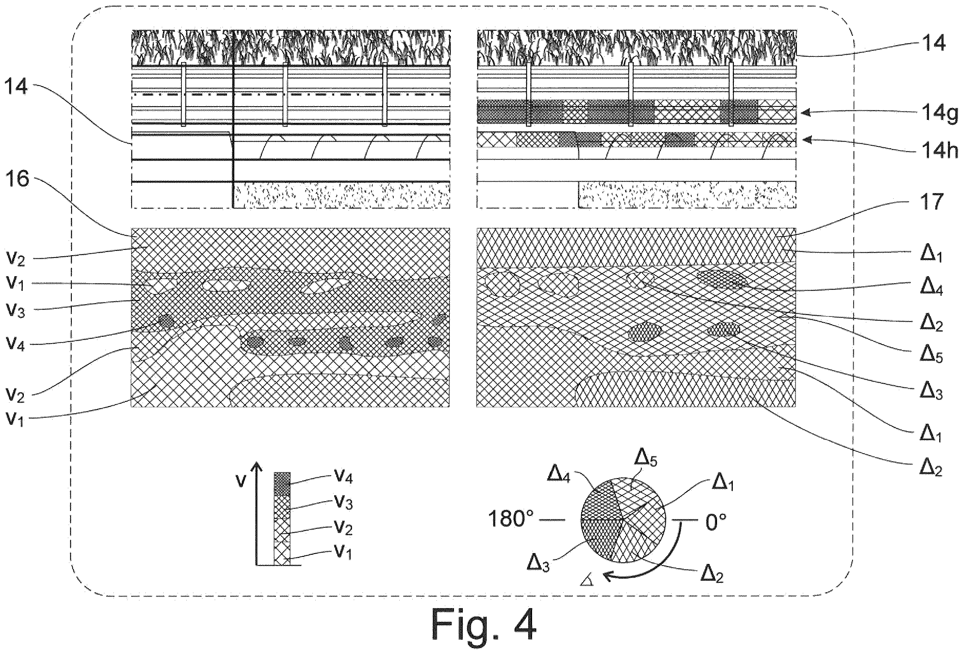

Ein Beispiel für die Darstellung verschiedener Geschwindigkeiten bzw. Geschwindigkeitsbereiche v₁-v₄ durch unterschiedliche Farben, Graustufen und/oder Texturen ist in Fig. 4 links in der Mitte dargestellt. In der Mitte rechts befindet sich eine entsprechende Darstellung verschiedener Richtungsänderungen bzw. Richtungsänderungsbereiche Δ₁-Δ₅.

Fig. 4 stellt dabei schematisch eine Ansicht der Anzeigeeinrichtung 15a dar, wobei oben links ein Bild 14 einer Bildsequenz dargestellt ist, die von der Sensoreinheit 12 erzeugt worden ist. Das Bild 14 entspricht dabei dem Bild in Fig. 3a).

In der Mitte ist in der Anzeigeeinrichtung 15a links wie gesagt das Geschwindigkeitskennfeld 16 und rechts das Richtungsänderungskennfeld 17 dargestellt. Eine Definition der Farben, Graustufen und/oder Texturen für Geschwindigkeiten bzw. Geschwindigkeitsbereiche v₁-v₄ ist unten links und für Richtungsänderungen bzw. Richtungsänderungsbereiche Δ₁-Δ₅ unten rechts dargestellt.

Fig. 4 zeigt die Ansicht der Anzeigeeinrichtung 15a zu einem bestimmten Zeitpunkt. Über die Zeit wird dabei die gesamte Bildsequenz angezeigt, wobei sich das Geschwindigkeitskennfeld 16 und das Richtungsänderungskennfeld 17 den aufeinanderfolgenden Bildern der Bildsequenz immer unmittelbar anpassen.

Die Regelungseinrichtung 11 ist hier und vorzugsweise konfiguriert, von der Bildverarbeitungseinheit 13 berechnete Geschwindigkeiten und Richtungsänderungen jeweils mit mindesten einem vorgegebenen Grenzwert, hier jeweils einem oberen Grenzwert und einem unteren Grenzwert, zu vergleichen. Bei einem Unterschreiten des jeweiligen Grenzwerts werden, wie bereits erläutert wurde, entsprechende Regelungsmaßnahmen der landwirtschaftlichen Arbeitsmaschine 1 und/oder der Erntegutbergungsanordnung 2 durchgeführt.

Wie nun Fig. 3b) zeigt, werden die Bilder 14 von der Bildverarbeitungseinheit 13 in verschiedene Bildbereiche unterteilt. Wie Fig. 3a) und b) zu entnehmen ist, erfasst die Sensoreinheit 12 den Feldbestand 5 sowohl vor der Erntegutbergungsanordnung 2 als auch dahinter. Zusätzlich kann von der Sensoreinheit 12 hier und vorzugsweise die Erntegutaufnahmevorrichtung 7, die Erntegutschneidvorrichtung 8, die Erntegutfördervorrichtung 9 und die Ernteguteinzugsvorrichtung 10 erfasst werden. Auch wird der Erntegutstrom innerhalb der Erntegutaufnahmevorrichtung 7 und der Erntegutstrom vertikal oberhalb der Erntegutschneidvorrichtung 8, hier zwischen der Erntegutaufnahmevorrichtung 7 und der Erntegutfördervorrichtung 9, erfasst. Um die relevanten Bereiche mit dem Erntegutstrom isolieren zu können, werden nun Bildbereiche in den Bildern 14 ermittelt, hier und vorzugsweise ein Bildbereich 14a mit dem Feldbestand 5 vor der Erntegutbergungsanordnung 2, ein Bildbereich 14b mit dem Feldbestand 5 hinter der Erntegutbergungsanordnung 2, ein Bildbereich 14c mit der Erntegutaufnahmevorrichtung 7, ein Bildbereich 14d mit der Erntegutschneidvorrichtung 8, ein Bildbereich 14e mit der Erntegutfördervorrichtung 9, ein Bildbereich 14f mit der Ernteguteinzugsvorrichtung 10, ein Bildbereich 14g mit dem Erntegutstrom innerhalb der Erntegutaufnahmevorrichtung 7 und/oder ein Bildbereich 14h mit dem Erntegutstrom vertikal oberhalb der Erntegutschneidvorrichtung 8, insbesondere in dem Bereich zwischen der Erntegutaufnahmevorrichtung 7 und der Erntegutfördervorrichtung 9.

Für vorzugsweise all diese Bildbereiche 14a bis 14h berechnet die Bildverarbeitungseinheit 13 die Geschwindigkeiten und/oder Richtungsänderungen, die zu dem Geschwindigkeitskennfeld 16 bzw. dem Richtungsänderungskennfeld 17 zusammengefasst werden.

Die beiden Bildbereiche 14g und14h mit dem jeweiligen Erntegutstrom werden hier und vorzugsweise von der Bildverarbeitungseinheit 13 quer zur Fahrtrichtung in Unterbereiche unterteilt, was in Fig. 4 oben rechts symbolisch durch unterschiedliche Texturen in den Bildbereichen 14g und 14h dargestellt ist. Für jeden Unterbereich ermittelt die Bildverarbeitungseinheit 13 einen mittleren Wert für die Gutflussgeschwindigkeiten, der ein Absolutwert sein kann, aber auch das Verhältnis zu einem Referenzwert, insbesondere zu dem oberen Grenzwert, sein kann. Die mittleren Werte können zur Visualisierung auch durch unterschiedliche Farben, Graustufen und/oder Texturen dargestellt werden. Zusätzlich oder alternativ können auch entsprechende Zahlenwerte, insbesondere Prozentwerte, angezeigt werden (hier nicht dargestellt).

### Bezugszeichenliste:

- 1: Landwirtschaftliche Arbeitsmaschine
- 2: Erntegutbergungsanordnung
- 3: Schneidwerk
- 4: Erntegut
- 5: Feldbestand
- 6: Weitere Arbeitsorgane
- 7: Erntegutaufnahmevorrichtung
- 8: Erntegutschneidvorrichtung
- 9: Erntegutfördervorrichtung
- 10: Ernteguteinzugsvorrichtung
- 11: Regelungseinrichtung
- 12: Sensoreinheit
- 13: Bildverarbeitungseinheit
- 14: Bild
- 14a-h: Bildbereiche
- 15: Datenausgabeeinheit
- 15a: Anzeigeeinrichtung
- 16: Geschwindigkeitskennfeld
- 17: Richtungsänderungskennfeld
- v₁-v₄: Geschwindigkeitsbereiche
- Δ₁-Δ₅: Richtungsänderungsbereiche

## Patentansprüche

1. Landwirtschaftliche Arbeitsmaschine, insbesondere Erntemaschine,
mit einer Erntegutbergungsanordnung (2) zum Abtrennen und Aufnehmen von Erntegut (4) aus einem Feldbestand (5), die als Komponenten (7-10) zumindest eine Erntegutschneidvorrichtung (8), eine dieser nachgeordnete Erntegutfördervorrichtung (9) und eine dieser nachgeordnete Ernteguteinzugsvorrichtung (10) aufweist, und
mit einer Regelungseinrichtung (11), die zumindest eine Sensoreinheit (12) zur optischen Erfassung eines Erntegutstroms, eine Bildverarbeitungseinheit (13) zur Verarbeitung von Bildern (14), die von der Sensoreinheit (12) basierend auf dem optisch erfassten Erntegutstrom erzeugt werden, und eine Datenausgabeeinheit (15) zur Ausgabe der von der Bildverarbeitungseinheit (13) verarbeiteten Bilder (14) aufweist,
wobei die Bildverarbeitungseinheit (13) basierend auf den von der Sensoreinheit (12) erzeugten Bildern (14) ein Geschwindigkeitskennfeld (16) erstellt, **dadurch gekennzeichnet,**
**dass** die Bildverarbeitungseinheit (13) konfiguriert ist, basierend auf den von der Sensoreinheit (12) erzeugten Bildern (14) zusätzlich zu dem Geschwindigkeitskennfeld (16) ein Richtungsänderungskennfeld (17) zu erstellen, wobei die Informationen aus dem jeweiligen Richtungsänderungskennfeld (17) herangezogen werden, um die Informationen aus dem zugeordneten, also zeitlich korrespondierenden, Geschwindigkeitskennfeld (16) auf ihre Plausibilität hin zu prüfen, und dass die beiden Kennfelder (16, 17) gemeinschaftlich oder jedes einzeln von der Regelungseinrichtung (11) zur Regelung von Prozessen in der landwirtschaftlichen Arbeitsmaschine (1) und/oder in der Erntegutbergungsanordnung (2) herangezogen werden.

2. Landwirtschaftliche Arbeitsmaschine nach Anspruch 1, **dadurch gekennzeichnet, dass** das Geschwindigkeitskennfeld (16) Gutflussgeschwindigkeiten und/oder Geschwindigkeiten von Oberflächenabschnitten von Maschinenteilen der Komponenten (7-10) der Erntegutbergungsanordnung (2) aufweist, und/oder das Richtungsänderungskennfeld (17) Richtungsänderungen im Erntegutstrom und/oder Richtungsänderungen von Oberflächenabschnitten von Maschinenteilen der Komponenten (7-10) der Erntegutbergungsanordnung (2) aufweist.

3. Landwirtschaftliche Arbeitsmaschine nach Anspruch 1 oder 2, **dadurch gekennzeichnet, dass** die Bildverarbeitungseinheit (13) zur Erstellung der beiden Kennfelder (16, 17) derart konfiguriert ist, dass sie jeweils zwei, insbesondere zwei unmittelbar aufeinanderfolgende, Bilder (14) einer von der Sensoreinheit (12) erzeugten Bildsequenz zu einem Bildpaar gruppiert, wobei eine Zeitspanne zwischen den Bildern (14) des jeweiligen Bildpaares von der Bildverarbeitungseinheit (13) erfasst wird und/oder vorgegeben ist, und wobei jedes Bild (14) des jeweiligen Bildpaares ein Intensitätsmuster aufweist.

4. Landwirtschaftliche Arbeitsmaschine nach Anspruch 3, **dadurch gekennzeichnet, dass** die Bildverarbeitungseinheit (13) zur Erstellung der beiden Kennfelder (16, 17) derart konfiguriert ist, dass sie Positionsverschiebungen von den Intensitätsmustern zwischen den Bildern (14) des jeweiligen Bildpaares ermittelt, wobei die Positionsverschiebungen Verschiebungsbeträge und Verschiebungsrichtungen von den Intensitätsmustern umfassen, vorzugsweise, dass die Verschiebungsbeträge und Verschiebungsrichtungen für jedes Bildpaar jeweils als Vektoren eines Vektorfeldes des jeweiligen Bildpaares zusammengefasst werden.

5. Landwirtschaftliche Arbeitsmaschine nach Anspruch 4, **dadurch gekennzeichnet, dass** die Bildverarbeitungseinheit (13) konfiguriert ist, aus den Verschiebungsbeträgen von den Intensitätsmustern zwischen den Bildern (14) des jeweiligen Bildpaares und der Zeitspanne zwischen den Bildern (14) des jeweiligen Bildpaares Geschwindigkeiten zu berechnen, vorzugsweise, dass die Geschwindigkeiten die Gutflussgeschwindigkeiten des Erntegutstroms und/oder die Geschwindigkeiten der Oberflächenabschnitte der Maschinenteile der Komponenten (7-10) der Erntegutbergungsanordnung (2) sind.

6. Landwirtschaftliche Arbeitsmaschine nach einem der vorhergehenden Ansprüche, **dadurch gekennzeichnet, dass** die Datenausgabeeinheit (15) konfiguriert ist, die jeweiligen Geschwindigkeiten, insbesondere in Form von Geschwindigkeitsbereichen (v₁-v₄), die mehrere der Geschwindigkeiten zusammenfassen, graphisch anzuzeigen, vorzugsweise, dass verschiedene Geschwindigkeiten und/oder Geschwindigkeitsbereiche (v₁-v₄) mit unterschiedlichen Farben, Graustufen und/oder Texturen dargestellt werden.

7. Landwirtschaftliche Arbeitsmaschine nach einem der Ansprüche 4 bis 6, **dadurch gekennzeichnet, dass** die Bildverarbeitungseinheit (13) konfiguriert ist, Verschiebungsrichtungen von den Intensitätsmustern eines ersten Bildpaares mit Verschiebungsrichtungen von zugeordneten Intensitätsmustern eines zweiten Bildpaares derselben Bildsequenz, insbesondere eines darauf unmittelbar folgenden Bildpaares, zu vergleichen und daraus Richtungsänderungen zu berechnen, vorzugsweise, dass die Richtungsänderungen die Richtungsänderungen im Erntegutstrom und/oder die Richtungsänderungen von Oberflächenabschnitten von Maschinenteilen der Komponenten (7-10) der Erntegutbergungsanordnung (2) sind.

8. Landwirtschaftliche Arbeitsmaschine nach einem der vorhergehenden Ansprüche, **dadurch gekennzeichnet, dass** die Datenausgabeeinheit (15) konfiguriert ist, die jeweiligen Richtungsänderungen, insbesondere in Form von Richtungsänderungsbereichen (Δ₁-Δ₅), die mehrere der Richtungsänderungen zusammenfassen, graphisch anzuzeigen, vorzugsweise, dass verschiedene Richtungsänderungen und/oder Richtungsänderungsbereiche (Δ₁-Δ₅) mit unterschiedlichen Farben, Graustufen und/oder Texturen dargestellt werden.

9. Landwirtschaftliche Arbeitsmaschine nach einem der Ansprüche 6 bis 8, **dadurch gekennzeichnet, dass** die graphische Darstellung der Geschwindigkeiten und/oder die graphische Darstellung der Richtungsänderungen in einer Anzeigeeinrichtung (15a) der Datenausgabeeinheit (15), insbesondere benachbart zueinander, dargestellt werden, vorzugsweise, dass in der Anzeigeeinrichtung (15a) zusätzlich auch die Bildsequenz dargestellt wird.

10. Landwirtschaftliche Arbeitsmaschine nach einem der vorhergehenden Ansprüche, **dadurch gekennzeichnet, dass** die Regelungseinrichtung (11) konfiguriert ist, von der Bildverarbeitungseinheit (13) berechnete Geschwindigkeiten mit mindestens einem vorgegebenen Grenzwert, insbesondere einem oberen Grenzwert und einem unteren Grenzwert, zu vergleichen und bei einem Unterschreiten des jeweiligen Grenzwerts die landwirtschaftliche Arbeitsmaschine (1) oder eine oder mehrere der Komponenten (7-10) der Erntegutbergungsanordnung (2) zu regeln.

11. Landwirtschaftliche Arbeitsmaschine nach einem der vorhergehenden Ansprüche, **dadurch gekennzeichnet, dass** die Regelungseinrichtung (11) konfiguriert ist, von der Bildverarbeitungseinheit (13) berechnete Richtungsänderungen mit mindestens einem vorgegebenen Grenzwert, insbesondere einem oberen Grenzwert und einem unteren Grenzwert, zu vergleichen und bei einem Unterschreiten des jeweiligen Grenzwerts die landwirtschaftliche Arbeitsmaschine (1) oder eine oder mehrere der Komponenten (7-10) der Erntegutbergungsanordnung (2) zu regeln.

12. Landwirtschaftliche Arbeitsmaschine nach einem der vorhergehenden Ansprüche, **dadurch gekennzeichnet, dass** die Sensoreinheit (12) konfiguriert ist zur Erfassung
- des Feldbestands (5) in Fahrtrichtung vor der Erntegutbergungsanordnung (2) und/oder
- des Feldbestands (5) in Fahrtrichtung hinter der Erntegutbergungsanordnung (2) und/oder
- einer oder mehrerer der Komponenten (7-10) der Erntegutbergungsanordnung (2), insbesondere der Erntegutaufnahmevorrichtung (7), der Erntegutschneidvorrichtung (8), der Erntegutfördervorrichtung (9) und/oder der Ernteguteinzugsvorrichtung (10), und/oder
- des Erntegutstroms innerhalb der Erntegutaufnahmevorrichtung (7) und/oder
- des Erntegutstroms vertikal oberhalb der Erntegutschneidvorrichtung (8), insbesondere in Fahrtrichtung zwischen der Erntegutaufnahmevorrichtung (7) und der Erntegutfördervorrichtung (9).

13. Landwirtschaftliche Arbeitsmaschine nach einem der vorhergehenden Ansprüche, **dadurch gekennzeichnet, dass** die Bildverarbeitungseinheit (13) konfiguriert ist, in den Bildern (14) Bildbereiche (14a-14h) zu ermitteln, von denen
- ein Bildbereich (14a) zumindest abschnittsweise den Feldbestand (5) in Fahrtrichtung vor der Erntegutbergungsanordnung (2) und/oder
- ein Bildbereich (14b) zumindest abschnittsweise den Feldbestand (5) in Fahrtrichtung hinter der Erntegutbergungsanordnung (2) und/oder
- ein Bildbereich (14c) zumindest abschnittsweise die Erntegutaufnahmevorrichtung (7) und/oder
- ein Bildbereich (14d) zumindest abschnittsweise die Erntegutschneidvorrichtung (8) und/oder
- ein Bildbereich (14e) zumindest abschnittsweise die Erntegutfördervorrichtung (9) und/oder
- ein Bildbereich (14f) zumindest abschnittsweise die Ernteguteinzugsvorrichtung (10) und/oder
- ein Bildbereich (14g) zumindest abschnittsweise den Erntegutstrom innerhalb der Erntegutaufnahmevorrichtung (7) und/oder
- ein Bildbereich (14h) zumindest abschnittsweise den Erntegutstrom vertikal oberhalb der Erntegutschneidvorrichtung (8), insbesondere in Fahrtrichtung zwischen der Erntegutaufnahmevorrichtung (7) und der Erntegutfördervorrichtung (9),
abbildet.

14. Landwirtschaftliche Arbeitsmaschine nach Anspruch 13, **dadurch gekennzeichnet, dass** die Bildverarbeitungseinheit (13) konfiguriert ist, für einen oder mehrere, insbesondere für alle, Bildbereiche die Geschwindigkeiten und/oder Richtungsänderungen zu berechnen und das jeweilige Kennfeld (16, 17) zu erstellen.

15. Landwirtschaftliche Arbeitsmaschine nach Anspruch 13 oder 14, **dadurch gekennzeichnet, dass** die Bildverarbeitungseinheit (13) konfiguriert ist, den Bildbereich mit dem Erntegutstrom innerhalb der Erntegutaufnahmevorrichtung (7) und/oder den Bildbereich mit dem Erntegutstrom vertikal oberhalb der Erntegutschneidvorrichtung (8), insbesondere in Fahrtrichtung zwischen der Erntegutaufnahmevorrichtung (7) und der Erntegutfördervorrichtung (9), quer zur Fahrtrichtung in Unterbereiche zu unterteilen und für jeden Unterbereich einen mittleren Wert für die Gutflussgeschwindigkeiten des Erntegutstroms zu ermitteln, wobei der mittlere Wert ein Absolutwert oder das Verhältnis zu einem Referenzwert, insbesondere zu dem oberen Grenzwert, ist.

16. Landwirtschaftliche Arbeitsmaschine nach Anspruch 15, **dadurch gekennzeichnet, dass** die Datenausgabeeinheit (15) konfiguriert ist, den mittleren Wert graphisch anzuzeigen, vorzugsweise, dass der mittlere Wert als Zahlenwert, insbesondere Prozentwert, dargestellt wird und/oder dass verschiedene mittlere Werte mit unterschiedlichen Farben, Graustufen und/oder Texturen dargestellt werden.

17. Landwirtschaftliche Arbeitsmaschine nach einem der vorhergehenden Ansprüche, **dadurch gekennzeichnet, dass** die Regelung von Prozessen basierend auf dem Geschwindigkeitskennfeld (16) und/oder Richtungsänderungskennfeld (17)
- die Regelung der Fahrgeschwindigkeit der landwirtschaftlichen Arbeitsmaschine (1) und/oder
- die Regelung der Geschwindigkeit und/oder Lage einer oder mehrerer der Komponenten (7-10) der Erntegutbergungsanordnung (2) und/oder
- die Regelung der Geschwindigkeit und/oder Lage eines oder mehrerer weiterer Arbeitsorgane (6) der landwirtschaftlichen Arbeitsmaschine (1)
umfasst.

18. Landwirtschaftliche Arbeitsmaschine nach einem der vorhergehenden Ansprüche, **dadurch gekennzeichnet, dass** die Erntegutaufnahmevorrichtung (7) eine Haspel und/oder die Erntegutschneidvorrichtung (8) ein Schneidwerkstisch mit einem Messerbalken und/oder die Erntegutfördervorrichtung (9) eine Förderschnecke und/oder die Ernteguteinzugsvorrichtung (10) ein Schrägförderer ist.

19. Verfahren zum Betrieb einer landwirtschaftlichen Arbeitsmaschine (1) nach einem der vorhergehenden Ansprüche
mit einer Erntegutbergungsanordnung (2) zum Abtrennen und Aufnehmen von Erntegut (4) aus einem Feldbestand (5), die als Komponenten (7-10) zumindest eine Erntegutschneidvorrichtung (8), eine dieser nachgeordnete Erntegutfördervorrichtung (9) und eine dieser nachgeordnete Ernteguteinzugsvorrichtung (10) aufweist, und
mit einer Regelungseinrichtung (11), die zumindest eine Sensoreinheit (12) zur optischen Erfassung eines Erntegutstroms, eine Bildverarbeitungseinheit (13) zur Verarbeitung von Bildern (14), die von der Sensoreinheit (12) basierend auf dem optisch erfassten Erntegutstrom erzeugt werden, und eine Datenausgabeeinheit (15) zur Ausgabe der von der Bildverarbeitungseinheit (13) verarbeiteten Bilder (14) aufweist,
wobei die Bildverarbeitungseinheit (13) basierend auf den von der Sensoreinheit (12) erzeugten Bildern (14) ein Geschwindigkeitskennfeld (16) erstellt, **dadurch gekennzeichnet,**
**dass** die Bildverarbeitungseinheit (13) basierend auf den von der Sensoreinheit (12) erzeugten Bildern (14) zusätzlich zu dem Geschwindigkeitskennfeld (16) ein Richtungsänderungskennfeld (17) erstellt, und
**dass** die beiden Kennfelder (16, 17) gemeinschaftlich oder jedes einzeln von der Regelungseinrichtung (11) zur Regelung von Prozessen in der landwirtschaftlichen Arbeitsmaschine (1) und/oder in der Erntegutbergungsanordnung (2) herangezogen werden.

## Claims

1. An agricultural working machine, in particular a harvester, comprising
a crop collection arrangement (2) for separating and picking up crop material (4) from a field stand (5), which as components (7-10) has at least one crop cutting device (8), a crop conveyor device (9) arranged downstream thereof and a crop intake device (10) arranged downstream of the latter, and
a closed-loop control device (11) which has at least one sensor unit (12) for optical detection of a crop material flow, an image processing unit (13) for processing images (14) which are generated by the sensor unit (12) based on the optically detected crop material flow and a data output unit (15) for output of the images (14) processed by the image processing unit (13),
wherein the image processing unit (13) creates a speed characteristic diagram (16) based on the images (14) produced by the sensor unit (12),
**characterised in that**
the image processing unit (13) is configured to create a directional change characteristic diagram (17) based on the images (14) produced by the sensor unit (12) in addition to the speed characteristic diagram (16), wherein the information from the respective directional change characteristic diagram (17) is used to check the information from the associated speed characteristic diagram (16), corresponding therefore in respect of time, in respect of its plausibility, and that the two characteristic diagrams (16, 17) are used jointly or each individually by the closed-loop control device (11) for the control of processes in the agricultural working machine (1) and/or in the crop collection arrangement (2).

2. An agricultural working machine according to claim 1 **characterised in that** the speed characteristic diagram (16) has material flow speeds and/or speeds of surface portions of machine parts of the components (7-10) of the crop collection arrangement (2) and/or the directional change characteristic diagram (17) has directional changes in the crop material flow and/or directional changes of surface portions of machine parts of the components (7-10) of the crop collection arrangement (2).

3. An agricultural working machine according to claim 1 or claim 2 **characterised in that** the image processing unit (13) for creating the two characteristic diagrams (16, 17) is configured in such a way that it respectively groups two, in particular two directly successive, images (14) of an image sequence produced by the sensor unit (12) to form an image pair, wherein a period of time between the images (14) of the respective image pair is detected by the image processing unit (13) and/or is predetermined, and wherein each image (14) of the respective image pair has a intensity pattern.

4. An agricultural working machine according to claim 3 **characterised in that** the image processing unit (13) for creating the two characteristic diagrams (16, 17) is configured in such a way that it ascertains shifts in position of the intensity patterns between the images (14) of the respective image pair, wherein the shifts in position include shift amounts and shift directions of the intensity patterns, and preferably that the shift amounts and the shift directions for each image pair are respectively combined as vectors of a vector field of the respective image pair.

5. An agricultural working machine according to claim 4 **characterised in that** the image processing unit (13) is configured to calculate speeds from the shift amounts of the intensity patterns between the images (14) of the respective image pair and the period of time between the images (14) of the respective image pair, and preferably that the speeds are the material flow speeds of the crop material flow and/or the speeds of the surface portions of the machine parts of the components (7-10) of the crop collection arrangement (2).

6. An agricultural working machine according to one of the preceding claims **characterised in that** the data output unit (15) is configured to graphically display the respective speeds, in particular in the form of speed ranges (v₁-v₄) which combine a plurality of the speeds, and preferably that various speeds and/or speed ranges (v₁-v₄) are represented in different colours, grey stages and/or textures.

7. An agricultural working machine according to one of claims 4 to 6 **characterised in that** the image processing unit (13) is configured to compare shift directions of the intensity patterns of a first image pair to shift directios of associated intensity patterns of a second image pair of the same image sequence, in particular a directly following image pair, and to calculate directional changes therefrom, and preferably that the directional changes are the directional changes in the crop material flow and/or the directional changes of surface portions of machine parts of the components (7-10) of the crop collection arrangement (2).

8. An agricultural working machine according to one of the preceding claims **characterised in that** the data output unit (15) is configured to graphically display the respective directional changes, in particular in the form of directional change ranges (Δ₁-Δ₅) which combine together a plurality of the directional changes, and preferably that different directional changes and/or directional change ranges (Δ₁-Δ₅) are represented in different colours, grey stages and/or textures.

9. An agricultural working machine according to one of claims 6 to 8 **characterised in that** the graphical representation of the speeds and/or the graphical representation of the directional changes are represented in a display device (15a) of the data output unit (15), in particular in mutually adjacent relationship, and preferably that the image sequence is additionally also represented in the display device (15a).

10. An agricultural working machine according to one of the preceding claims **characterised in that** the closed-loop control device (11) is configured to compare speeds calculated by the image processing unit (13) to at least one predetermined limit value, in particular an upper limit value and a lower limit value, and to control the agricultural working machine (1) or one or more of the components (7-10) of the crop collection arrangement (2) when the speed falls below the respective limit value.

11. An agricultural working machine according to one of the preceding claims **characterised in that** the closed-loop control device (11) is configured to compare directional changes calculated by the image processing unit (13) to at least one predetermined limit value, in particular an upper limit value and a lower limit value, and to control the agricultural working machine (1) or one or more of the components (7-10) of the crop collection arrangement (2) when the speed falls below the respective limit value.

12. An agricultural working machine according to one of the preceding claims **characterised in that** the sensor unit (12) is configured to detect
- the field stand (5) in front of the crop collection arrangement (2) in the direction of travel, and/or
- the field stand (5) behind the crop collection arrangement (2) in the direction of travel,
- one or more of the components (7-10) of the crop collection arrangement (2), in particular the crop pick-up device (7), the crop cutting device (8), the crop conveyor device (9) and/or the crop intake device (10), and/or
- the crop material flow within the crop pick-up device (7), and/or
- the crop material flow vertically above the crop cutting device (8), in particular in the direction of travel between the crop pick-up device (7) and the crop conveyor device (9).

13. An agricultural working machine according to one of the preceding claims **characterised in that** the image processing unit (13) is configured to ascertain in the images (14) image regions (14a-14h) of which:
- an image region (14a) at least portion-wise images the field stand (5) in front of the crop collection arrangement (2) in the direction of travel, and/or
- an image region (14b) at least portion-wise images the field stand (5) behind the crop collection arrangement (2) in the direction of travel, and/or
- an image region (14c) at least portion-wise images the crop pick-up device (7), and/or
- an image region (14d) at least portion-wise images the crop cutting device (8), and/or
- an image region (14e) at least portion-wise images the crop conveyor device (9), and/or
- an image region (14f) at least portion-wise images the crop intake device (10), and/or
- an image region (14g) at least portion-wise images the crop material flow within the crop pick-up device (7), and/or
- an image region (14h) at least portion-wise images the crop material flow vertically above the crop cutting device (8), in particular in the direction of travel between the crop pick-up device (7) and the crop conveyor device (9).

14. An agricultural working machine according to claim 13 **characterised in that** the image processing unit (13) is configured to calculate the speeds and/or directional changes for one or more, in particular for all image regions, and to create the respective characteristic diagram (16, 17).

15. An agricultural working machine according to claim 13 or claim 14 **characterised in that** the image processing unit (13) is configured to subdivide the image region with the crop material flow within the crop pick-up device (7) and/or the image region with the crop material flow vertically above the crop cutting device (8), in particular in the direction of travel between the crop pick-up device (7) and the crop conveyor device (9), into sub-regions transversely relative to the direction of travel, and to ascertain for each sub-region a mean value for the material flow speeds of the crop material flow, wherein the mean value is an absolute value or the ratio to a reference value, in particular the upper limit value.

16. An agricultural working machine according to claim 15 **characterised in that** the data output unit (15) is configured to graphically display the mean value and preferably that the mean value is represented as a numerical value, in particular a percentage value, and/or that various mean values are represented in different colours, grey stages and/or textures.

17. An agricultural working machine according to one of the preceding claims **characterised in that** the closed-loop control of processes based on the speed characteristic diagram (16) and/or directional change characteristic diagram (17) includes
- closed-loop control of the travel speed of the agricultural working machine (1), and/or
- closed-loop control of the speed and/or position of one or more of the components (7-10) of the crop collection arrangement (2), and/or
- closed-loop control of the speed and/or position of one or more further working members (6) of the agricultural working machine (1).

18. An agricultural working machine according to one of the preceding claims **characterised in that** the crop pick-up device (7) is a reel and/or the crop cutting device (8) is a cutting header table having a blade bar and/or the crop conveyor device (9) is a conveyor screw and/or the crop intake device (10) is an inclined conveyor.

19. A method of operating an agricultural working machine (1) according to one of the preceding claims comprising
a crop collection arrangement (2) for separating and picking up crop material (4) from a field stand (5), which as components (7-10) has at least one crop cutting device (8), a crop conveyor device (9) arranged downstream thereof and a crop intake device (10) arranged downstream of the latter, and
a closed-loop control device (11) which has at least one sensor unit (12) for optical detection of a crop material flow, an image processing unit (13) for processing images (14) which are generated by the sensor unit (12) based on the optically detected crop material flow and a data output unit (15) for output of the images (14) processed by the image processing unit (13),
wherein the image processing unit (13) creates a speed characteristic diagram (16) based on the images (14) produced by the sensor unit (12),
**characterised in that**
the image processing unit (13) creates a directional change characteristic diagram (17) based on the images (14) produced by the sensor unit (12) in addition to the speed characteristic diagram (16), and
the two characteristic diagrams (16, 17) are used jointly or each individually by the closed-loop control device (11) for the closed-loop control of processes in the agricultural working machine (1) and/or in the crop collection arrangement (2).

## Revendications

1. Machine de travail agricole, en particulier machine de récolte, comprenant un agencement de collecte de produit récolté (2) pour sectionner et ramasser du produit récolté (4) à partir d'une culture en champ (5), lequel comporte comme composants (7-10) au moins un dispositif de coupe de produit récolté (8), un dispositif d'amenée de produit récolté (9) succédant à celui-ci et un dispositif d'alimentation de produit récolté (10) succédant à celui-ci, et comprenant un équipement de régulation (11) qui comprend au moins une unité de capteurs (12) pour la détection optique d'un flux de produit récolté, une unité de traitement d'images (13) pour le traitement d'images (14) qui sont générées par l'unité de capteurs (12) sur la base du flux de produit récolté détecté optiquement, et une unité de sortie de données (15) pour sortir les images (14) traitées par l'unité de traitement d'images, l'unité de traitement d'images (13) créant un diagramme caractéristique de vitesses (16) sur la base des images (14) générées par l'unité de capteurs (12), **caractérisée en ce que** l'unité de traitement d'images (13) est configurée pour créer, en plus du diagramme caractéristique de vitesses (16), un diagramme caractéristique de changement de direction (17) sur la base des images (14) générées par l'unité de capteurs (12), les informations issues du diagramme caractéristique de changement de direction respectif (17) étant utilisées pour contrôler la plausibilité des informations issues du diagramme caractéristique de vitesses (16) associé, c'est-à-dire qui lui correspond temporellement, et **en ce que** les deux diagrammes caractéristiques (16, 17) sont utilisés conjointement ou individuellement par l'équipement de régulation (11) pour réguler des processus dans la machine de travail agricole (1) et/ou dans l'agencement de collecte de produit récolté (2).

2. Machine de travail agricole selon la revendication 1, **caractérisée en ce que** le diagramme caractéristique de vitesses (16) comporte des vitesses de flux de produit et/ou des vitesses de portions superficielles de parties de machine des composants (7-10) de l'agencement de collecte de produit récolté (2), et/ou le diagramme caractéristique de changements de direction (17) comporte des changements de direction dans le flux de produit récolté et/ou des changements de direction de portions superficielles de parties de machine des composants (7-10) de l'agencement de collecte de produit récolté (2).

3. Machine de travail agricole selon la revendication 1 ou 2, **caractérisée en ce que**, pour créer les deux diagrammes caractéristiques (16, 17), l'unité de traitement d'images (13) est configurée de façon à grouper sous la forme d'une paire d'images respectivement deux images, en particulier immédiatement consécutives (14) d'une séquence d'images générée par l'unité de capteurs (12), un intervalle de temps entre les images (14) de la paire d'images respective étant détecté par l'unité de traitement d'images (13) et/ou étant prescrit, et chaque image (14) de la paire d'images respective comportant un motif d'intensité.

4. Machine de travail agricole selon la revendication 3, **caractérisée en ce que**, pour créer les deux diagrammes caractéristiques (16, 17), l'unité de traitement d'images (13) est configurée de façon à déterminer des déplacements positionnels des motifs d'intensité entre les images (14) de la paire d'images respective, les déplacements positionnels incluant des valeurs de déplacement et des directions de déplacement des motifs d'intensité, de préférence de façon que les valeurs de déplacement et les directions de déplacement pour chaque paire d'images soient respectivement rassemblées sous forme de vecteurs d'un champ vectoriel de la paire d'images respective.

5. Machine de travail agricole selon la revendication 4, **caractérisée en ce que** l'unité de traitement d'images (13) est configurée pour calculer des vitesses à partir des valeurs de déplacement des motifs d'intensité entre les images (14) de la paire d'images respective et de l'intervalle de temps entre les images (14) de la paire d'images respective, de préférence **en ce que** les vitesses sont les vitesses de flux de produit du flux de produit récolté et/ou les vitesses des portions superficielles des parties de machine des composants (7-10) de l'agencement de collecte de produit récolté (2).

6. Machine de travail agricole selon une des revendications précédentes, **caractérisée en ce que** l'unité de sortie de données (15) est configurée pour afficher graphiquement les vitesses respectives, en particulier sous forme de zones de vitesses (v₁-v₄) qui rassemblent plusieurs des vitesses, de préférence **en ce que** des vitesses et/ou zones de vitesses (v₁-v₄) différentes sont représentées avec diverses couleurs, niveaux de gris et/ou textures.

7. Machine de travail agricole selon une des revendications 4 à 6, **caractérisée en ce que** l'unité de traitement d'images (13) est configurée pour comparer des directions de déplacement des motifs d'intensité d'une première paire d'images avec des directions de déplacement de motifs d'intensité associés d'une seconde paire d'images de la même séquence d'images, en particulier d'une paire d'images immédiatement consécutive, et pour en déduire des changements de direction, de préférence **en ce que** les changements de direction sont les changements de direction dans le flux de produit récolté et/ou les changements de direction de portions superficielles de parties de machine des composants (7-10) de l'agencement de collecte de produit récolté (2).

8. Machine de travail agricole selon une des revendications précédentes, **caractérisée en ce que** l'unité de sortie de données (15) est configurée pour afficher graphiquement les changements de direction respectifs, en particulier sous forme de zones de changements de direction (Δ₁-Δ₅) qui rassemblent plusieurs des changements de direction, de préférence **en ce que** des changements de direction et/ou des zones de changements de direction différents (Δ₁-Δ₅) sont représentés avec diverses couleurs, niveaux de gris et/ou textures.

9. Machine de travail agricole selon une des revendications 6 à 8, **caractérisée en ce que** la représentation graphique des vitesses et/ou la représentation graphique des changements de direction sont représentées dans un équipement d'affichage (15a) de l'unité de sortie de données (15), en particulier de façon contiguë, de préférence **en ce qu'**en plus, la séquence d'images est également représentée dans l'équipement d'affichage (15a).

10. Machine de travail agricole selon une des revendications précédentes, **caractérisée en ce que** l'équipement de régulation (11) est configuré pour comparer des vitesses calculées par l'unité de traitement d'images (13) avec au moins une valeur limite prescrite, en particulier une valeur limite supérieure et une valeur limite inférieure, et, en cas de soupassement de la valeur limite respective, pour réguler la machine de travail agricole (1) ou un ou plusieurs des composants (7-10) de l'agencement de collecte de produit récolté (2).

11. Machine de travail agricole selon une des revendications précédentes, **caractérisée en ce que** l'équipement de régulation (11) est configuré pour comparer des changements de direction calculés par l'unité de traitement d'images (13) avec au moins une valeur limite prescrite, en particulier une valeur limite supérieure et une valeur limite inférieure, et, en cas de soupassement de la valeur limite respective, pour réguler la machine de travail agricole (1) ou un ou plusieurs des composants (7-10) de l'agencement de collecte de produit récolté (2).

12. Machine de travail agricole selon une des revendications précédentes, **caractérisé en ce que** l'unité de capteurs (12) est configurée pour détecter
- la culture en champ (5) dans le sens de la marche devant l'agencement de collecte de produit récolté (2)
- la culture en champ (5) dans le sens de la marche dans le sens de la marche derrière l'agencement de collecte de produit récolté (2) et/ou
- un ou plusieurs des composants (7-10) de l'agencement de collecte de produit récolté (2), en particulier du dispositif de ramassage de produit récolté (7), du dispositif de coupe de produit récolté (8), du dispositif d'amenée de produit récolté (9) et/ou du dispositif d'alimentation de produit récolté (10), et/ou
- le flux de produit récolté à l'intérieur du dispositif de ramassage de produit récolté (7) et/ou
- le flux de produit récolté verticalement au-dessus du dispositif de coupe de produit récolté (8), en particulier dans le sens de la marche entre le dispositif de ramassage de produit récolté (7) et le dispositif d'amenée de produit récolté (9).

13. Machine de travail agricole selon une des revendications précédentes, **caractérisée en ce que** l'unité de traitement d'images (13) est configurée pour déterminer, dans les images (14), des zones d'images (14a-14h) parmi lesquelles
- une zone d'image (14a) figure au moins par portions la culture en champ (5) dans le sens de la marche devant l'agencement de collecte de produit récolté (2) et/ou
- une zone d'image (14b) figure au moins par portions la culture en champ (5) dans le sens de la marche derrière l'agencement de collecte de produit récolté (2) et/ou
- une zone d'image (14c) figure au moins par portions le dispositif de ramassage de produit récolté (7) et/ou
- une zone d'image (14d) figure au moins par portions le dispositif de coupe de produit récolté (8) et/ou
- une zone d'image (14e) figure au moins par portions le dispositif d'amenée de produit récolté (9) et/ou
- une zone d'image (14f) figure au moins par portions le dispositif d'alimentation de produit récolté (10) et/ou
- une zone d'image (14g) figure au moins par portions le flux de produit récolté à l'intérieur du dispositif de ramassage de produit récolté (7) et/ou
- une zone d'image (14h) figure au moins par portions le flux de produit récolté verticalement au-dessus du dispositif de coupe de produit récolté (8), en particulier dans le sens de la marche entre le dispositif de ramassage de produit récolté (7) et le dispositif d'amenée de produit récolté (9).

14. Machine de travail agricole selon la revendication 13, **caractérisée en ce que** l'unité de traitement d'images (13) est configurée pour calculer, pour une ou plusieurs zones d'images, en particulier pour toutes, des vitesses et/ou des changements de direction et pour créer le diagramme caractéristique respectif (16, 17).

15. Machine de travail agricole selon la revendication 13 ou 14, **caractérisée en ce que** l'unité de traitement d'images (13) est configurée pour diviser en sous-zones la zone d'image avec le flux de produit récolté à l'intérieur du dispositif de ramassage de produit récolté (7) et/ou la zone d'image avec le flux de produit récolté verticalement au-dessus du dispositif de coupe de produit récolté (8), en particulier dans le sens de la marche entre le dispositif de ramassage de produit récolté (7) et le dispositif d'amenée de produit récolté (9), transversalement au sens de la marche, et pour déterminer, pour chaque sous-zone, une valeur moyenne pour les vitesses de flux de produit du flux de produit récolté, la valeur moyenne étant une valeur absolue ou le rapport à une valeur de référence, en particulier à la valeur limite supérieure.

16. Machine de travail agricole selon la revendication 15, **caractérisée en ce que** l'unité de sortie de données (15) est configurée pour afficher graphiquement la valeur moyenne, de préférence **en ce que** la valeur moyenne est représentée sous la forme d'une valeur numérique, en particulier d'une valeur en pourcentage, et/ou **en ce que** des valeurs moyennes différentes sont représentées avec diverses couleurs, niveaux de gris et/ou textures.

17. Machine de travail agricole selon une des revendications précédentes, **caractérisée en ce que** la régulation de processus sur la base du diagramme caractéristique de vitesses (16) et du diagramme caractéristique de changements de direction (17) inclut
- la régulation de la vitesse de marche de la machine de travail agricole (1) et/ou
- la régulation de la vitesse et/ou position d'un ou plusieurs composants (7-10) de l'agencement de collecte de produit récolté (2) et/ou
- la régulation de la vitesse et/ou position d'un ou plusieurs autres organes de travail (6) de la machine de travail agricole (1).

18. Machine de travail agricole selon une des revendications précédentes, **caractérisée en ce que** le dispositif de ramassage de produit récolté (7) est un rabatteur et/ou le dispositif de coupe de produit récolté (8) est une table de tablier de coupe avec un lamier et/ou le dispositif d'amenée de produit récolté (9) est une vis d'amenée et/ou le dispositif d'alimentation de produit récolté (10) est un convoyeur incliné.

19. Procédé de fonctionnement d'une machine de travail agricole (1) selon une des revendications précédentes, comprenant un agencement de collecte de produit récolté (2) pour sectionner et ramasser du produit récolté (4) à partir d'une culture en champ (5), lequel comporte comme composants (7-10) au moins un dispositif de coupe de produit récolté (8), un dispositif d'amenée de produit récolté (9) succédant à celui-ci et un dispositif d'alimentation de produit récolté (10) succédant à celui-ci, et comprenant un équipement de régulation (11) qui comprend au moins une unité de capteurs (12) pour la détection optique d'un flux de produit récolté, une unité de traitement d'images (13) pour le traitement d'images (14) qui sont générées par l'unité de capteurs (12) sur la base du flux de produit récolté détecté optiquement, et une unité de sortie de données (15) pour sortir les images (14) traitées par l'unité de traitement d'images, l'unité de traitement d'images (13) créant un diagramme caractéristique de vitesses (16) sur la base des images (14) générées par l'unité de capteurs (12), **caractérisée en ce que** l'unité de traitement d'images (13) crée, en plus du diagramme caractéristique de vitesses (16), un diagramme caractéristique de changement de direction (17) sur la base des images (14) générées par l'unité de capteurs (12), et **en ce que** les deux diagrammes caractéristiques (16, 17) sont utilisés conjointement ou individuellement par l'équipement de régulation (11) pour réguler des processus dans la machine de travail agricole (1) et/ou dans l'agencement de collecte de produit récolté (2).
